# EUROPEAN PATENT APPLICATION

(11) **EP 2 178 049 A1**
(43) Date of publication of application: **21.04.2010**
(21) Application number: 08166757.8
(22) Date of filing: 16.10.2008
(51) Int. Cl.: G06T 11/00, G06T 1/20

(54) **Method and apparatus for generating visual patterns**

(71) Applicant: Kastrup, Bernardo, 5509 NP Veldhoven (NL)
(72) Inventor: Kastrup, Bernardo, 5509 NP Veldhoven (NL)
(74) Representative: Hatzmann, Martin

(57) **Abstract**

A method generates frame segments of an image frame depending on values of data elements comprised in a set of data elements (300). The method comprises the steps of: (a) partitioning (400) a plurality of tuples (320) of values of data elements comprised in the set of data elements into a plurality of clusters of tuples; (b) classifying (400) a reference tuple (322) into a cluster of the plurality of clusters of tuples depending on a similarity metric; and (c) generating (500) a new data value (520) depending on classification data (420) related to the classification of the reference tuple into a cluster of the plurality of clusters of tuples, the value of a reference data element (310) being updated with said new data value. A frame segment can be generated depending on the new data value and then displayed in a display segment of a display.

## Description

### TECHNICAL FIELD

The invention relates to the fields of new media art, particularly generative art, and consumer electronics.

### BACKGROUND ART

Generative art refers to artwork that has been generated in an algorithmic manner through the use of generative art systems comprising e.g. computer software algorithms or similar mathematical, electronic, and/or mechanical autonomous processes. Generative visual art systems generate visual patterns; such systems can be advantageously used in consumer electronics devices comprising displays that, instead of displaying pre-produced content like movies, display algorithmicallygenerated visual artwork.

Many different types of algorithms and methods have been used for generating visual patterns in the context of generative art. One class of algorithms has been particularly prominent in the field: cellular automata (see e.g. "Cellular Automata", by Andrew Ilachinski, World Scientific Publishing Pte Ltd, July 2001, ISBN-13: 978-9812381835). Cellular automaton algorithms operate on the basis of rules for updating states held by cells in an array of cells so the states of said cells change over time. Said rules are referred to as cell state update rules. The cell state update rules in a cellular automaton algorithm are determined *a priori* by the artist, and do not change during the operation of the algorithm. Different image frames are generated depending on the states of the cells at different moments in time. As the states of the cells change, complex visual patterns emerge in the corresponding image frames. Artists like Australian Jonathan McCabe and American Scott Draves have used cellular automata methods to striking visual effect.

However, because the cell state update rules in a cellular automaton algorithm do not change during the operation of the algorithm, the visual patterns that emerge, albeit dynamic in nature, become predictable and repetitive after a certain period of time; so much so that e.g. the majority of the visual patterns that emerge from a particularly dynamic and famous cellular automaton algorithm, Conway's Game of Life, can be classified according to a limeted taxonomy of visual patterns wherein different visual patterns are attributed names like "block", "toad", "blinker", "glider", "spaceship", and "pulsar". The type and style of the visual patterns that begin to recur after a cellular automaton algorithm has operated for a certain period of time are a function of the cell state update rules defined *a priori* by the artist. Mitchell Whitelaw, in "Metacreation: Art and Artificial Life",MIT Press, April 1, 2006.ISBN-13: 978-0262731768, tates that such *a priori* rules *"limit the outcomes in a way that produces a kind of familial style* [...]. *In an art world context this emergent style is readily accepted as the style of the individual artist, but* [the *a priori* rules] *form a boundary, a limit". A priori* rules limit the degrees of creative freedom along which the generative visual art system can operate, thereby limiting its appeal as an object of art and as a consumer electronics device. In fact, generative art is a meta-creation endeavor: the artist does not directly create the artwork, but only the system that in turn creates the artwork. Here, as put by Whitelaw, the artist *"wants to create creation, variation, otherness".* To achieve it, the artist needs to *"surrender* [his or her] *intentionality",* i.e. his or her willed design, so to increase the creative autonomy available to the generative visual art system itself. In a radical attempt to surrender his own willed design, and avoid the predictability of determinism in general, influential American composer John Cage is cited for teaching that *"art must entail the random, indeterminate and chance aspects of nature".* The higher the creative autonomy, i.e. the number of degrees of creative freedom, available to a generative visual art system, the higher is its attractiveness and value as a consumer electronics device.

To increase the creative autonomy available to a generative visual art system two limitations must be removed: (a) the rules whereby the state of the generative visual art system changes over time must be defined by the system itself, not by its designer; and (b) said rules themselves must be allowed to autonomously change over time, so the visual patterns created do not become predictable or monotonous as in the case of cellular automata. In addition, since the determinism of algorithmic rules tends to lead to recurring and predictable visual patterns generated by the generative visual art system, randomness can be advantageously integrated into the method for generating the visual patterns through capturing the outcome of a stochastic process. However, earlier attempts at generative visual art systems wherein randomness is integrated into the method for generating the visual patterns have led to the generation of visual patterns that lose their structure, and therefore their visual coherence, by decaying into chaotic visual noise.

### DISCLOSURE OF INVENTION

It is a first object of the present invention to provide a generative visual art system for generating dynamic and coherent visual patterns wherein the rules for updating the state of said system are defined by the system itself. It is a further, second object of the present invention to provide a generative visual art system wherein the rules for updating the state of said system change autonomously during operation of the system. It is yet another, third object of the present invention to provide a generative visual art system that allows for the integration of randomness into the visual patterns generated without destroying the visual coherence of said visual patterns. All above-mentioned objects of the present invention can be achieved by applying the methods and apparatuses described below, in the form of a generative visual art system.

The invention is defined by claim 1. Advantageous embodiments are described in the dependent claims.

According to the present invention, a method for generating and displaying image frames, each image frame comprising a plurality of frame segments, generates the frame segments depending on values of data elements comprised in a set of data elements. The value of a data element can be updated depending on the values of other data elements, so different image frames can be generated and displayed over time. Preferably, said data elements are cells, and said values of data elements are the states of said cells. To generate the frame segments, the method comprises the steps of: (a) partitioning a plurality of tuples of values of data elements comprised in the set of data elements into a plurality of clusters of tuples, the number of clusters in said plurality of clusters of tuples being smaller than the number of tuples in said plurality of tuples; (b) classifying a so-called reference tuple (which may or not be comprised in said plurality of tuples) into a cluster of the plurality of clusters of tuples depending on a similarity metric; and (c) generating a new data value depending on classification data related to the classification of said reference tuple into a cluster of the plurality of clusters of tuples, the value of a so-called reference data element being updated with said new data value. A frame segment can be generated depending on said new data value and then displayed in a display segment of a display. The method is similar to a cellular automaton in that the value of a data element comprised in the set of data elements is updated depending on the values of other data elements also comprised in the set of data elements. However, unlike in a cellular automaton, in the present invention the value of a data element is updated depending on a partitioning of tuples of values of data elements according e.g. to a partitional clustering algorithm known in the art, instead of on an *a priori* rule. Therefore, the rule for updating the value of a data element is defined by the method itself, thereby achieving the first object of the present invention.

The reference tuple is preferably classified into the one of the plurality of clusters of tuples that is most similar to the reference tuple according to the similarity metric referred to above. In order to clearly define said similarity metric, and therewith specify a classification criterion, it is advantageous that: (a) the reference tuple correspond to a point in a mathematically-defined space; and (b) each cluster of the plurality of clusters of tuples also correspond to a point in the same mathematically-defined space. The similarity metric then comprises the distances between the point corresponding to the reference tuple and the points corresponding to the clusters of the plurality of clusters of tuples. This way, the reference tuple is said to be most similar to, and therefore classified into, the cluster of tuples whose point in the mathematically-defined space is closest to the point corresponding to the reference tuple, as claimed in claim 2.

From the art in the field of mathematics, it can be observed that a tuple of values defines a point in the mathematically-defined space whereby each value in the tuple corresponds to a coordinate of said point. Therefore, each tuple in the plurality of tuples of values of data elements corresponds to a point in the mathematically-defined space. It can also be observed from the description above that, during the step of partitioning the plurality of tuples into a plurality of clusters of tuples, each tuple is allocated (thereby belonging) to one cluster of the plurality of clusters of tuples. Given the previous two observations, the coordinates of the point in the mathematically-defined space corresponding to a particular cluster of tuples preferably depends on points in the mathematically-defined space corresponding to tuples allocated (i.e. belonging) to said particular cluster of tuples during said step of partitioning, as claimed in claim 3.

There is a plurality of advantageous ways wherein the coordinates of said point corresponding to a particular cluster of tuples can be defined depending on the points corresponding to tuples allocated to said particular cluster of tuples. A preferred one of said plurality of advantageous ways, as claimed in claim 4, comprises the following steps: (a) selecting a particular tuple from the plurality of tuples; (b) determining a winning cluster, said winning cluster being the cluster of the plurality of clusters of tuples whose corresponding point in the mathematically-defined space is closest to the point in the mathematically-defined space corresponding to said particular tuple; and (c) changing the coordinates of the point in the mathematically-defined space corresponding to the winning cluster so its distance to the point corresponding to the particular tuple becomes even shorter.

To ensure that visual patterns generated based on the method according to the present invention are coherent, it is advantageous to build a reinforcement mechanism into the method, as claimed in claim 5. According to said reinforcement mechanism, the values of data elements used to (re-)define the clusters of tuples in a given iteration of the method are themselves defined in an earlier iteration of the method according to an earlier definition of the clusters of tuples. This way, whatever structure is present in the initial data upon which the method operates is detected and amplified by said reinforcement mechanism. The visual patterns are then generated according to said amplified structure, thereby becoming visually coherent. It should be noted that, since in a subsequent iteration of the method the clusters of tuples can be (re-)defined, the second object of the present invention is thereby achieved.

Since the image frames are typically 2-dimensional images, it is preferred that the set of data elements comprise a 2-dimensional array of data elements, as claimed in claim 6.

In some applications of the present invention, it is advantageous that a second 2-dimensional array of data elements be further comprised in the set of data elements, so that the reference tuple comprises a value of a data element comprised in said first 2-dimensional array of data elements as well as a value of a data element comprised in said second 2-dimensional array of data elements, as claimed in claim 7.

To achieve the third object of the present invention, it is advantageous that the value of a particular data element comprised in the set of data elements be dependent on a pseudo-random number generation algorithm (as claimed in claim 8) or on the outcome of a stochastic process (as claimed in claim 9). Preferably, said particular data element is comprised in the second 2-dimensional array of data elements described above.

The step of partitioning the plurality of tuples into a plurality of clusters of tuples can be advantageously performed according to one or more of the many partitional clustering algorithms known in the art, as claimed in claim 10. Examples of known partitional clustering algorithms are: K-means clustering, fuzzy clustering, clustering, localitv-sensitive hashing, formal concept analysis, K-nearest neighbor algorithm, etc. The step of partitioning the plurality of tuples into a plurality of clusters of tuples can also be advantageously performed according to an adaptive algorithm, as claimed in claim 11. Examples of such adaptive algorithms are: competitive learning algorithms using e.g. the Kohonen learning rule, self-organizing feature maps, other types of artificial neural networks (as claimed in claim 12) preferably trained according to an unsupervised learning paradigm, like e.g. adaptive resonance theory, etc.

The method according to the present invention is preferably executed by means of an apparatus comprising a processing system and a display, as claimed in claim 13. When the method according to the present invention comprises using true random numbers as input, it is advantageous that said apparatus further comprise a hardware random number generator to generate said true random numbers, as claimed in claim 14. It is further advantageous that said hardware random number generator generate said true random numbers depending on the outcome of an inherently non-deterministic process like a quantum phenomenon, as claimed in claim 15.

### BRIEF DESCRIPTION OF DRAWINGS

The invention is described in more details and by way of non-limiting examples with reference to the accompanying drawings, wherein:
FIG. 1 schematically depicts how an image frame displayed in a display is generated from the values of data elements comprised in a 2-dimensional array of data elements;
FIG. 2 schematically depicts four different examples of cell neighborhoods when the 2-dimensional array of data elements is an array of cells;
FIG. 3 schematically depicts how the state of a cell is updated according to the method of the present invention;
FIG. 4 schematically depicts more details of an example embodiment of the method for updating the state of a cell, as depicted in FIG. 3;
FIG. 5 schematically depicts yet more details of the example embodiment of the method for updating the state of a cell, as depicted in FIG. 3;
FIG. 6 depicts a series of image frames generated according to a combination of the methods illustrated in FIG. 1, FIG. 4, and FIG. 5;
FIG. 7 schematically depicts a set of data elements comprising three overlaying 2-dimensional arrays of data elements;
FIG. 8 schematically depicts a set of data elements comprising two overlaying 2-dimensional arrays of data elements;
FIG. 9 depicts a comparison of the evolution of internal parameters of two different embodiments of the method according to the present invention;
FIG. 10 schematically depicts an apparatus for performing the method according to the present invention;
FIG. 11 schematically depicts a more detailed example embodiment of an element of the apparatus depicted in FIG. 10.

### MODES FOR CARRYING OUT THE INVENTION

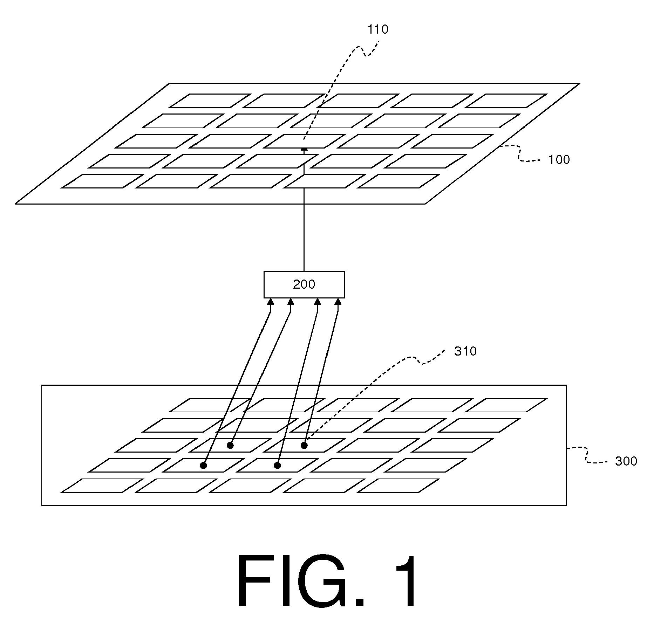

FIG. 1 illustrates a display 100 comprising a plurality of display segments 110, each display segment comprising at least one of the physical pixels of display 100. An image frame is displayed in display 100. A part of the image frame displayed in a display segment is referred to as a frame segment. The frame segments are generated according to an image generation algorithm. The image generation algorithm operates on a set of data elements to generate the frame segments. Data elements in said set of data elements are preferably, although not necessarily, arranged in a 2-dimensional array of data elements 300, said 2-dimensional array of data elements comprising as many data elements as there are display segments. This way, there is a one-to-one correspondence between each display segment and a data element, each display segment corresponding to a different data element. In FIG. 1 display segment 110 corresponds to data element 310. Each frame segment is generated depending on one or more data elements comprised in the 2-dimensional array of data elements 300. In FIG. 1, the frame segment to be displayed in display segment 110 is generated by taking the output of a mathematical function 200 applied to the values of four different data elements comprised in the 2-dimensional array of data elements 300, said four different data elements comprising data element 310 and three data elements adjacent to data element 310. An example embodiment of mathematical function 200 is a bi-linear interpolation algorithm (known in the art) that generates color and/or intensity values for the physical pixels in display segment 110 by interpolating the values of the four data elements comprised in the 2-dimensional array of data elements 300 that are used as input arguments to mathematical function 200. There are many other advantageous algorithms for generating image frames depending on the values of data elements of a set of data elements in the context of claim 1, like e.g. color-map transformations and other algorithms based on look-up tables, contrast enhancement algorithms, other types of interpolation algorithms like e.g. bi-cubic interpolation, etc. Many of these algorithms relate to the fields of image processing - being described e.g. in "The Image Processing Handbook", by John C. Russ, CRC, 5th edition (December 19, 2006), ISBN-13: 978-0849372544 - image manipulation, and computer graphics - being described e.g. in "Computer Graphics: Principles and Practice in C", by James D. Foley , Addison-Wesley Professional; 2nd edition (August 14, 1995), ISBN-13: 978-0201848403.

The description above relates to a method for generating an image frame. Preferably, however, moving images comprising dynamic and coherent visual patterns are generated. For that purpose, a plurality of mutually different image frames must be generated and displayed in succession in display 100. This way, in each iteration of the image generation algorithm a new image frame is preferably generated. Since each image frame is preferably generated depending on the values of data elements comprised in the 2-dimensional array of data elements 300, it is preferred that the values of said data elements be updated at least partly from one iteration of the image generation algorithm to the next, so different image frames can be generated in succession and thereby form dynamic visual patterns. To achieve this, the image generation algorithm is preferably arranged so each data element is an algorithmic element called a cell, each cell holding a state at any moment in time, the state of a cell preferably changing over time. The 2-dimensional array of data elements is then referred to as an array of cells. The topology of the 2-dimensional array of display segments is preserved in the array of cells. This way, if e.g. a first display segment corresponding to a first cell is physically near a second display segment corresponding to a second cell, then the second cell is said to be near the first cell; cells corresponding to physically adjacent display segments are said to be adjacent cells; and so on. Cell states are preferably updated in each iteration of the image generation algorithm, so a new image frame is produced depending on updated cell states. When the data elements in the set of data elements are cells, mathematical function 200 uses current and/or past states of said cells as its input arguments. A cell is a preferred example of a data element in the context of the appended claims.

The image generation algorithm comprises determining how cell states change from one iteration of the image generation algorithm to the next. It is known in the art that cellular automaton algorithms are capable of generating extremely rich, dynamic, and coherent visual patterns. A cellular automaton algorithm determines the next state of a given cell depending on current and/or past states of cells nearby said given cell, which are said to be comprised in a "cell neighborhood" of said given cell (the cell neighborhood of a cell may comprise the cell itself). Therefore, in the present invention, it is preferred that the next state of a given cell be dependent mostly upon the current and/or past states of cells in its cell neighborhood. The state of a cell neighborhood, referred to as a neighborhood state, is a tuple of states held by the cells comprised in said cell neighborhood. As known from the field of mathematics, a tuple is an ordered list of values, each value of a certain type. There is a one-to-one correspondence between the position of each value in the list and its specified type. In the present invention, said values are cell states and their respective types (i.e. positions in the ordered list) relate to the specific cell that holds (or held) each of said cell states. This way, the order of the cell states in a tuple identifies which specific cell holds (or held) each cell state in the tuple. A tuple of states held by the cells comprised in a cell neighborhood is a preferred example of a tuple of values of data elements, in the context of the appended claims.

For the avoidance of doubt, it should be noted that, in the appended claims, the concept of a tuple of values of data elements comprised in a set of data elements is used generically. For instance, in claim 1, the update of the value of the reference data element is meant to depend generally on the values of data elements comprised in a sub-set of said set of data elements. However, as known from the field of mathematics, if the term "sub-set" is interpreted strictly, the order of the elements in a sub-set does not discriminate between different sub-sets. Therefore, when a sub-set of data elements is meant to represent e.g. a cell neighborhood, multiple different cell neighborhoods could be represented by the same sub-set; this would happen when the same cell states are comprised in two different cell neighborhoods, said cell neighborhoods being different because different cells in each respective cell neighborhood hold a given one of said cell states; i.e. when the different cell neighborhoods comprise different configurations of the same set of cell states. Therefore, using the term "sub-set" instead of "tuple" in the context of claim 1 would be strictly inaccurate in the generic case, since it wouldn't discern between possible different cell neighborhoods. When the data elements are e.g. cells, the use of the term "tuple" in the appended claims should be construed solely as a means of specifying that not only the set of cell states in a cell neighborhood is important for determining the next state of a given cell, but potentially also which specific cells in said cell neighborhood hold (or held) each specific cell state in said set of cell states. Therefore, the term "tuple" should not be construed as limiting the generality of what is claimed in the appended claims as far as e.g. the format and/or manner in which data is represented, organized, stored, and/or processed, or as restricting the claims in any other way.

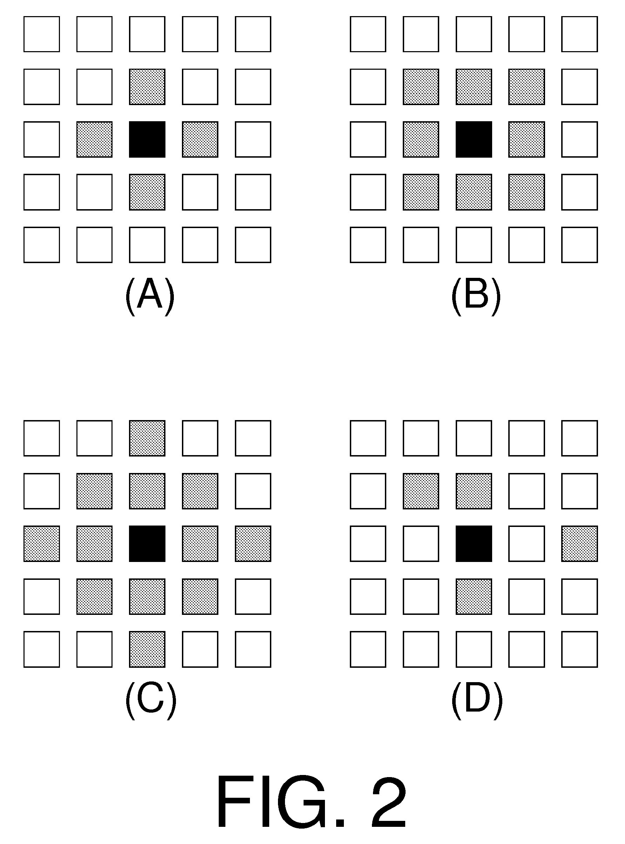

In FIG. 2 four different example cell neighborhoods of a central cell in a 2-dimensional array of cells are depicted. The central cell is highlighted in black, while the cells comprised in each respective example cell neighborhood are highlighted in gray. It is assumed that the central cell itself is also comprised in its cell neighborhood. In FIG. 2A a so-called "von Neumann neighborhood", known in the art, is depicted. In FIG. 2B a so-called "Moore neighborhood", also known in the art, is depicted. As illustrated in FIG. 2C, the cell neighborhood of a given cell may comprise cells that are not adjacent to said given cell (i.e. cells at a Chebyshev distance of more than one cell from said given cell). Finally, as illustrated in FIG. 2D, cell neighborhoods are not necessary symmetric or contiguous.

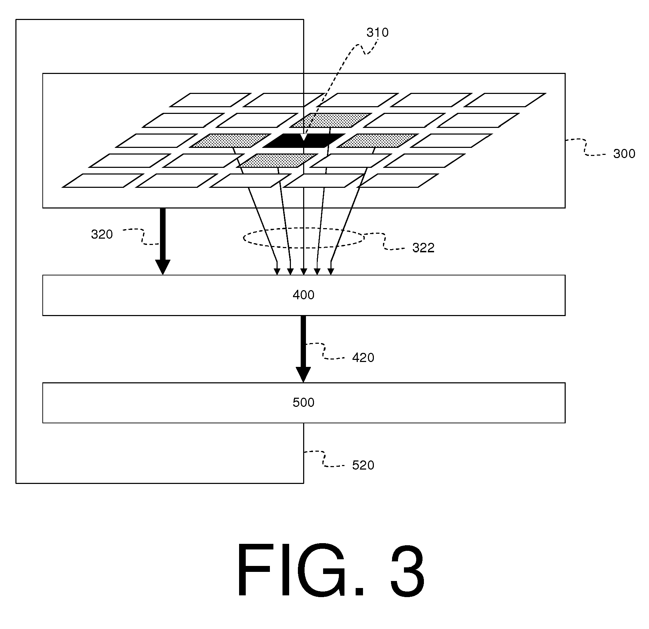

FIG. 3 depicts a method for updating the states of cells in an array of cells 300. A cell 310 is highlighted along with its cell neighborhood comprising cell 310 itself and four orthogonally adjacent cells (i.e. a von Neumann neighborhood). According to the method, in a first phase a neighborhood state clustering means 400 reads in neighborhood state data 320 comprising a plurality of neighborhood states from array of cells 300. Since the cell neighborhoods of different cells in array of cells 300 may partially overlap (i.e. may comprise the same cells), different neighborhood states comprised in neighborhood state data 320 may also partially overlap, i.e. may comprise the states of the same cells. Neighborhood state clustering means 400 then performs what is known in the art as data clustering. To perform said data clustering, a partitional clustering algorithm can be used like e.g. K-means clustering, fuzzy clustering, QT clustering, locality-sensitive hashing, formal concept analysis, K-nearest neighbor algorithm, etc. Preferably, an adaptive algorithm is used like e.g. competitive learning algorithms using e.g. the Kohonen learning rule (see e.g. "Self-Organization and Associative Memory" by Teuvo Kohonen, Springer, 3rd sub-edition, September 1989, ISBN-13: 978-0387513874),self-organizng feature maps, other types of artificial neural networks preferably trained according to an unsupervised learning paradigm, like e.g. adaptive resonance theory, etc. According to the data clustering algorithm chosen, neighborhood state clustering means 400 partitions said plurality of neighborhood states comprised in neighborhood state data 320 into clusters, so that neighborhood states in each cluster are more similar to one another than to neighborhood states in other clusters; this process is called partitioning. To prevent a situation wherein each cluster comprises a single different neighborhood state (in which case similarity-based clustering is not meaningful), the number of clusters is smaller than the number of neighborhood states being partitioned. Each of said clusters is called a neighborhood state cluster. A neighborhood state cluster is a preferred example of a cluster of tuples of values of data elements in the context of the appended claims. Preferably, a first neighborhood state is said to be more similar to a second neighborhood state than to a third neighborhood state when: (a) said first, second, and third neighborhood states each define (directly or e.g. through a mathematical transformation) a point in a mathematically-defined space; and (b) in said mathematically-defined space, the point defined by the first neighborhood state is closer to the point defined by the second neighborhood state than to the point defined by the third neighborhood state, according to a chosen distance metric. Naturally, similarity is then a function of the mathematically-defined space and distance metric chosen. Once the partitioning is complete, a reference point is defined in the mathematically-defined space by each neighborhood state cluster. The reference point defined by a neighborhood state cluster is a function (e.g. an average) of the points defined in the mathematically-defined space by neighborhood states allocated to said neighborhood state cluster during partitioning, as claimed in claim 3. The reference points allow the definition of a classification criterion for classifying any (further) neighborhood state into one of said neighborhood state clusters. Namely, a (further) neighborhood state is classified into a given neighborhood state cluster if the point defined by said neighborhood state in the mathematically-defined space is closer to the reference point defined by said given neighborhood state cluster than to the reference points defined by any of the other neighborhood state clusters, according to the chosen distance metric.

Still according to the method depicted in FIG. 3, in a second phase the neighborhood state 322 of a cell 310 is classified into one of the neighborhood state clusters by neighborhood state clustering means 400 according to the classification criterion described above, thereby generating classification data 420. Depending on the data clustering algorithm used, if neighborhood state 322 is already part of neighborhood state data 320 during the first phase, then the second phase may not be necessary, since neighborhood state 322 will already belong to a neighborhood state cluster after partitioning (in this case, the step of classifying the reference tuple into a cluster of the plurality of clusters of tuples, described in claim 1, is comprised in the step of partitioning the plurality of tuples into a plurality of clusters of tuples, also described in claim 1). Naturally, when neighborhood state 322 is not part of neighborhood state data 320 during the first phase, the second phase is necessary (in this case, the step of classifying the reference tuple into a cluster of the plurality of clusters of tuples, described in claim 1, is a further step to the step of partitioning the plurality of tuples into a plurality of clusters of tuples, also described in claim 1). Classification data 420 comprises information related to the classification of neighborhood state 322, like e.g.: distances from the point defined by neighborhood state 322 in the mathematically-defined space to reference points defined by one or more of the neighborhood state clusters; data identifying the neighborhood state cluster where neighborhood state 322 is classified into; etc. Depending on classification data 420, cell state generation means 500 then determines the next state 520 of cell 310. Preferably, cell state generation means 500 is arranged so that a different next state 520 corresponds to each different neighborhood state cluster the neighborhood state 322 can be classified into. Since next state 520 depends on classification data 420, and classification data 420 in turn depends on the classification criterion autonomously defined by the method depending on neighborhood state data 320, the first object of the present invention is achieved.

In summary: the first phase according to the method comprises defining neighborhood state clusters, which entails a classification criterion for classifying (further) neighborhood states into said neighborhood state clusters; and the second phase according to the method comprises classifying neighborhood states into said neighborhood state clusters according to said classification criterion. It should be noted that only during the first phase can the classification criterion, i.e. e.g. the coordinates of the reference points defined by each neighborhood state cluster, be defined and/or changed. It should also be noted that, under some circumstances, and depending on the algorithms chosen, the second phase may be redundant.

For the avoidance of doubt, it should be noted that, for a certain neighborhood state to be classified according to a certain classification criterion, said neighborhood state does not necessarily need to (although it might) have been comprised in neighborhood state data 320 for determining said classification criterion in the first place. In other words, neighborhood state clustering means 400 can determine a classification criterion based on a certain plurality of neighborhood states, and then classify further neighborhood states according to said classification criterion. It should also be noted that the method described above and illustrated in FIG. 3 is preferably implemented as software, in which case, for the avoidance of doubt, the neighborhood state clustering means 400 and the cell state generation means 500 may simply be sequences of computer instructions executed in e.g. a digital microprocessor and operating on data stored in e.g. a memory device.

The method described above and illustrated in FIG. 3 is suitable for generating dynamic and coherent visual patterns e.g. when used in combination with the method illustrated in FIG. 1. Visual patterns are coherent, as opposed to random and/or chaotic, when they conform to some structure. It is known from the art in the field of mathematics that the partitioning of data elements into a limited number of clusters of data elements according to a similarity metric, as described above, induces a topology. By generating new cell states according to this partitioning, the method forces the cell states, even when their configuration is initially random and/or chaotic, to conform to the structure of said topology, thereby forming coherent visual patterns that evolve as the method is iterated upon. It should be noted that said topology itself is derived from the neighborhood states comprised in neighborhood state data 320, so the method works by detecting and amplifying whatever structure is initially present in the configuration of cell states comprised in neighborhood state data 320, even when said structure is not perceivable to a human observer.

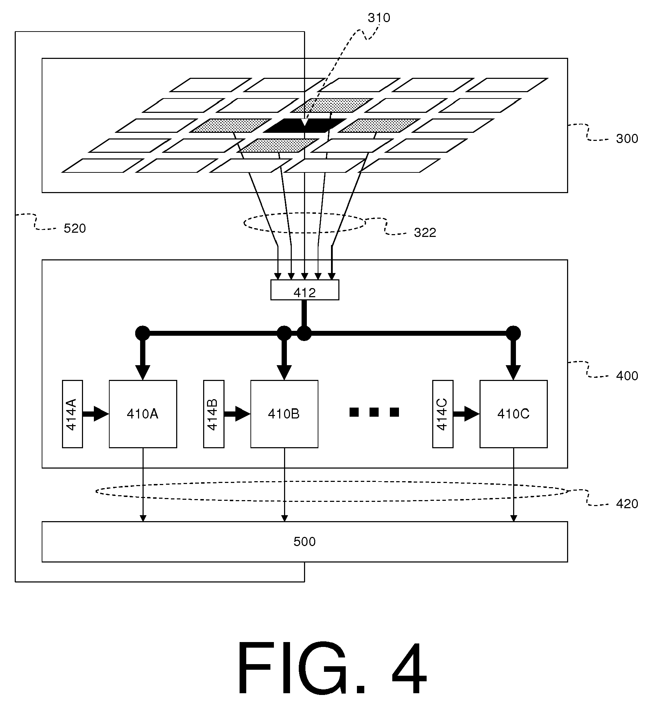

FIG. 4 illustrates a more detailed example embodiment of the method illustrated in FIG. 3, wherein it is assumed that the neighborhood state clusters and corresponding classification criterion have already been defined (later in this description it will be described how the neighborhood state clusters are defined in the first place). FIG. 4 then depicts how a neighborhood state 322 is classified into one of the neighborhood state clusters. As described earlier, neighborhood state 322 is a tuple. Said tuple, as known from the field of linear algebra, defines a point in an abstract vector space. Said point in the abstract vector space corresponds to a coordinate vector 412 referred to as input vector. Each of the coordinates of input vector 412 corresponds to a different individual cell state comprised in neighborhood state 322, as shown in FIG. 4. For the avoidance of doubt, as known from the art in the field of linear algebra, input vector 412 can also be said to be a point in the mathematically-defined abstract vector space. For the example of the von Neumann neighborhood illustrated in FIG. 4, input vector 412 has 5 coordinates. Input vector 412 is then inputted into each one of a plurality of distance calculation means 410A-C. There are as many distance calculation means 410A-C as there are neighborhood state clusters defined, each distance calculation means 410A-C corresponding to a different one of the neighborhood state clusters. Each distance calculation means 410A-C also has, as second input, a coordinate vector 414A-C referred to as reference vector, therewith calculating and outputting a distance between the input vector 412 and its respective reference vector 414A-C. Naturally, and for the avoidance of doubt, each reference vector 414A-C can also be said to be a point in the mathematically-defined abstract vector space. Said distances between the input vector 412 and the reference vectors 414A-C may correspond to any mathematically-defined distance metric like e.g. an Euclidean distance, a Manhattan distance, a Chebyshev distance, a Hamming distance, etc. In order to allow for the calculation of the distances, the input vector 412 and the reference vectors 414A-C all have the same number of dimensions (i.e. the same number of coordinates). The coordinates of the reference point defined by a neighborhood state cluster in the mathematically-defined space are the coordinates of the reference vector 414A-C of the corresponding distance calculation means 410A-C. Therefore, in this embodiment, the mathematically-defined space is an abstract vector space with as many dimensions as the reference vectors 414A-C and the input vector 412. Neighborhood state 322 is classified into the neighborhood state cluster corresponding to the distance calculation means 410A-C outputting the shortest distance.

Still in this embodiment, the distances outputted by each distance calculation means 410A-C are collectively comprised in classification data 420. Cell state generation means 500 receives each one of the distances as a different one of its inputs, each of said inputs having a unique index. For the avoidance of doubt, it should be noted that each of said indices then uniquely corresponds to a different distance calculation means 410A-C and, therefore, to a different neighborhood state cluster. Cell state generation means 500 then generates a next state 520 depending on said inputs. There are many different and advantageous ways in which cell state generation means 500 can generate the next state 520 depending on its inputs. In a simple embodiment, cell state generation means 500 uses a look-up table with as many addresses as it has inputs, each address holding a (preferably different) possible next state. The index of the input with smallest value is then used to address the look-up table, thereby retrieving the next state 520 from amongst the contents of the look-up table. Other more sophisticated embodiments are also possible and advantageous; for instance, cell state generation means 500 can generate the next state 520 by means of e.g. a weighed averaging of the distances comprised in classification data 420, or even by means of a more arbitrary mathematical function that combines (a sub-set of) the distances comprised in classification data 420.

It should be noted that the embodiment described above and illustrated in FIG. 4 is preferably implemented as software, in which case, for the avoidance of doubt, the neighborhood state clustering means 400, its distance calculation means 410A-C, and the cell state generation means 500 may all simply be sequences of computer instructions executed in e.g. a digital microprocessor. Moreover, the computer instructions corresponding to e.g. different distance calculation means 410A-C may be shared, i.e. different distance calculation means 410A-C may be realized by the same sequence of computer instructions executed repeatedly in e.g. a loop. Still in the case of a software implementation of this embodiment, input vector 412 and reference vectors 414A-C may simply be e.g. data stored in memory locations of a memory device that communicates with said digital microprocessor.

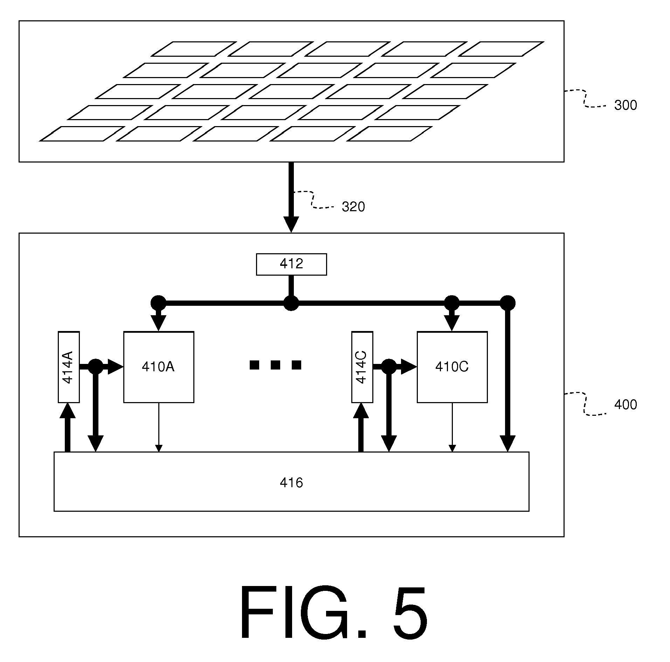

FIG. 5 illustrates how the neighborhood state clusters are defined in the first place. Neighborhood state clustering means 400 reads in neighborhood state data 320 comprising the plurality of neighborhood states from array of cells 300. The reference vectors 414A-C corresponding respectively to each distance calculation means 410A-C are initialized e.g. with random coordinates. The method then comprises one or more so-called epochs, each epoch corresponding to an epoch loop, the epoch loop comprising a plurality of iterations. The epoch loop preferably comprises as many iterations as there are neighborhood states in neighborhood state data 320. In each iteration of the epoch loop, the following steps are performed: (a) a different neighborhood state comprised in neighborhood state data 320 is presented to neighborhood state clustering means 400, each coordinate of input vector 412 being assigned the value of a different, individual cell state comprised in said presented neighborhood state; (b) each distance calculation means 410A-C calculates a distance between the input vector 412 and the reference vector 414A-C corresponding to said distance calculation means; and (c) reference vector update means 416 receives as inputs the input vector 412, the distances calculated by the distance calculation means 410A-C, and the corresponding reference vectors 414A-C, and then depending on said inputs reference vector update means 416 updates the coordinates of at least one of the reference vectors 414A-C.

Preferably, reference vector update means 416 updates the coordinates of the at least one reference vector 414A-C according to the Kohonen learning rule, known in the art (see e.g. "Self-Organization and Associative Memory" by Teuvo Kohonen, Springer, 3rd sub-edition, September 1989, ISBN-13:978-0387513874). According to the Kohonen learning rule, a so-called winning reference vector is chosen, said winning reference vector being the one of reference vectors 414A-C whose distance to the input vector 412 is shortest. In other words, the winning reference vector is the one of reference vectors 414A-C that is closest to the input vector 412. The coordinates of the winning reference vector are then updated so the distance between the winning reference vector and the input vector 412 is reduced; i.e. the winning reference vector becomes even closer to the input vector 412. As more iterations of the epoch loop are performed, different ones of reference vectors 414A-C become the winning vector of an iteration, depending on the neighborhood state presented in said iteration. At the end of the epoch loop, preferably all neighborhood states comprised in neighborhood state data 320 will have been presented to neighborhood state clustering means 400 once. Since the number of reference vectors 414A-C is smaller than the number of neighborhood states in neighborhood state data 320, at the end of the epoch loop different ones of reference vectors 414A-C will become closer respectively to different clusters of neighborhood states comprised in neighborhood state data 320, each of said clusters of neighborhood states comprising neighborhood states similar to one another. In order for said different ones of reference vectors 414A-C to become even closer respectively to said different clusters of neighborhood states, it may be advantageous that the method comprises multiple epochs, each epoch corresponding to an epoch loop, so that each neighborhood state comprised in neighborhood state data 320 is presented to neighborhood state clustering means 400 multiple times. The result is similar to that of a non-adaptive partitional clustering algorithm, except that the definition of the neighborhood state clusters (i.e. of the coordinates of the different reference vectors 414A-C) is done progressively and adaptively, as new neighborhood states are presented in different iterations of the epoch loop. This way, in each iteration of the epoch loop a neighborhood state cluster is adapted to take into account the latest neighborhood state presented.

It should again be noted that the embodiment described above and illustrated in FIG. 5 is preferably implemented as software, in which case, for the avoidance of doubt, the neighborhood state clustering means 400, its distance calculation means 410A-C, and the reference vector update means 416 may all simply be sequences of computer instructions executed in e.g. a digital microprocessor. Moreover, the computer instructions corresponding to e.g. different distance calculation means 410A-C may be shared, i.e. different distance calculation means 410A-C may be realized by the same sequence of computer instructions executed repeatedly in e.g. a loop. Still in the case of a software implementation of this embodiment, input vector 412 and reference vectors 414A-C may simply be e.g. data stored in memory locations of a memory device that communicates with said digital microprocessor.

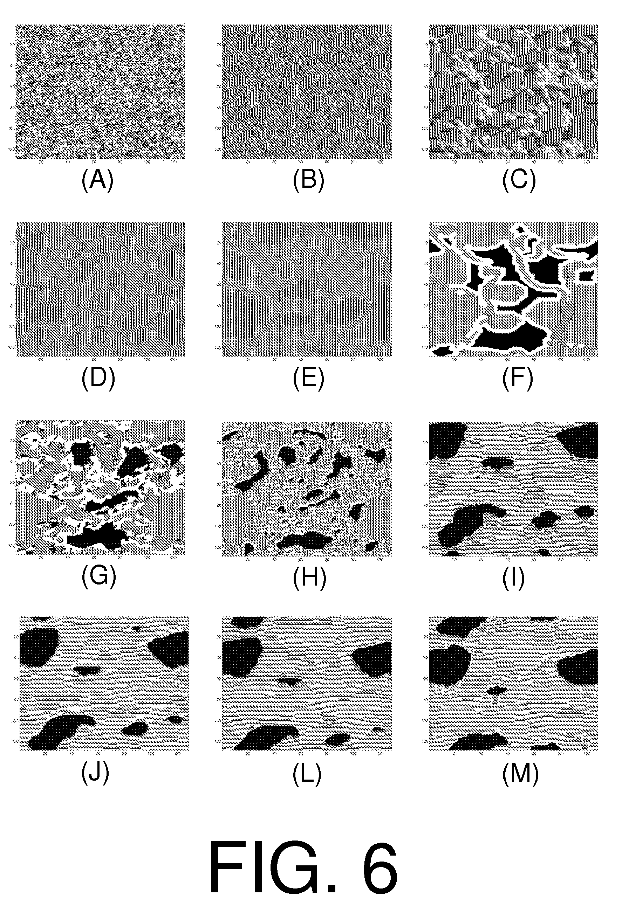

FIG. 6 illustrates several image frames generated by the embodiment described in the previous paragraphs and illustrated in FIG. 4 and FIG. 5. A Moore neighborhood is used. FIG. 6A illustrates a 2-dimensional array of cells comprising 128x128 cells, wherein the state of each cell is randomly initialized and illustrated with a color uniquely corresponding to the cell state. In order to randomly initialize the cell states, e.g. an algorithm for pseudo-random number generation can be used. Alternatively, the cell states can be initialized based on the outcome of a stochastic process; for that purpose, e.g. a hardware random number generator can be used, said hardware random number generator generating random numbers based on the inherent uncertainty of a physical process like e.g. a quantum phenomeon. As described above, starting off from the randomly-initialized array of cells, the method illustrated in FIG. 4 and FIG. 5 will detect and amplify whatever structure is present in the configuration of randomly-initialized cell states illustrated in FIG. 6A. To do so, initially the neighborhood state data (320), comprising neighborhood states from the array of cells illustrated in FIG. 6A, is used to update the coordinates of the reference vectors (414A-C) according to the method illustrated in FIG. 5, using one hundred epochs. Thereafter, the method illustrated in FIG. 4 and FIG. 5 is iterated upon a number of times. In each iteration the following steps are performed: (a) the states of all cells in the array of cells are updated according to the method illustrated in FIG. 4; (b) the new, updated cell states are comprised in updated neighborhood state data (320); (c) said updated neighborhood state data (320) is used to update the coordinates of the reference vectors (414A-C) according to the method illustrated in FIG. 5, using one epoch; (d) the next iteration is performed on the basis of the reference vectors (414A-C) whose coordinates were updated in the current iteration of the method. This way, a reinforcement mechanism is built into the method, whereby the updates of cell states made in one iteration determine how the coordinates of the reference vectors (414A-C) will be updated in the next iteration, thereby determining the updates of cell states in said next iteration, and so on. This way, as it is iterated upon, the method progressively reinforces and amplifies the structure originally found in its input data.

It should be noted that, initially, one hundred epochs are used to determine the coordinates of the reference vectors (414A-C) depending on the initial configuration of cell states shown in FIG. 6A, therewith entailing the definition of the neighborhood state clusters. Such relatively high number of one hundred epochs is initially used because, since the initial configuration of states is random, each neighborhood state in the neighborhood state data (320) needs to be presented many times to the neighborhood state clustering means (400) before said neighborhood state clustering means (400) can capture patterns of similarities across neighborhood states in the neighborhood state data (320). Thereafter, only one epoch is used for updating the coordinates of the reference vectors (414A-C) in each sub-sequent iteration. Such relatively low number of one epoch is used in each sub-sequent iteration to ensure a smooth and gradual update of the coordinates of the reference vectors (414A-C), thereby preventing discontinuities and lack of coherence in the dynamic visual patterns being generated. That said, it is possible that, under some circumstances, a different balance between the initial number of epochs and the number of epochs used during sub-sequent iterations be advantageous. Either way, since the coordinates of the reference vectors (414A-C) are updated in each subsequent iteration of the method as the method operates, the second object of the present invention is achieved.

FIG. 6B-M illustrate image frames generated depending on the cell states in the array of cells as the method is progressively iterated upon, as described above. The image frames clearly illustrate the emergence of perceivable structure in the configuration of cell states in the array of cells as the method is progressively iterated upon. For instance, FIG. 6B-C depict the emergence of visual patterns resembling biological tissue seen under a microscope, like e.g. biological cells and blood vessels; in FIG. 6D-E said "biological tissue" appears to coalesce into larger structures resembling individual microscopic organisms moving in a sparse fluidic medium; in FIG. 6F-G those individual "microscopic organisms" appear to grow, become unstable, and eventually explode into "debris" of larger and smaller sizes; in FIG. 6H-I the larger "debris" appear to coalesce and begin to float on a stream of smaller "debris"; finally, in FIG. 6J-M the visual patterns become more stable, and simply move from the top to the bottom of the array of cells as if floating downstream in a river. The mere fact that a human observer can related the visual patterns generated to familiar structures such as e.g. "biological cells", "blood vessels", "microscopic organisms", and "rivers" illustrates the presence of perceivable structure in the dynamic visual patterns generated and, therefore, that such dynamic visual patterns are coherent. All of the structure perceivable in the coherent and dynamic visual patterns depicted in FIG. 6B-M originates solely from the apparently structure-less configuration of cell states shown in FIG. 6A by the application of the method according to the present invention. In fact, the criterion for forming neighborhood state clusters and classifying (further) neighborhood states into said neighborhood state clusters is itself originated from the apparently structure-less configuration of cell states shown in FIG. 6A by the application of the method according to the present invention. This way, not only may the initial cell states not be explicitly defined by a human designer (if they are determined by e.g. a pseudo-random number generation algorithm), the rules that determine how cell states are updated are themselves also not defined by a human designer (unlike in e.g. cellular automata methods). Instead, said rules emerge (in the context of the process of emergence, known in the art) from data provided as input to the method. It can be said that the method according to the present invention provides deterministic meta-rules whereby said rules that determine how cell states are updated can be defined. This enlarges the number of degrees of creative freedom of the method according to the present invention beyond that of other methods known in the art, when the method according to the present invention is applied to the field of generative art. The method according to the present invention can increase the creative autonomy of a generative visual art system by, through the reinforcement mechanism described earlier, successfully detecting and amplifying whatever structure is present in the (potentially random) input data provided.

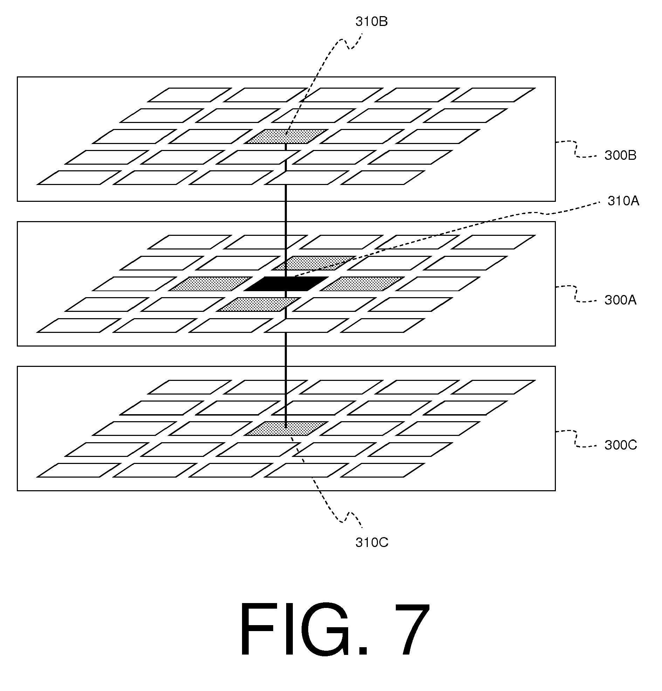

In the examples described so far it is assumed that the image generation algorithm operates on a set of data elements arranged as a 2-dimensional array of cells. However, there are many other advantageous embodiments wherein the set of data elements is not a 2-dimensional array. In FIG. 7 a 3-dimensional array of cells is depicted, the 3-dimensional array of cells comprising three layers of cells 300A-C, each of said three layers of cells 300A-C comprising a 2-dimensional array of cells. As depicted in FIG. 7 through the highlighted cells, the cell neighborhood of a cell 310A comprised in layer of cells 300A may (although not necessarily) comprise not only other cells comprised in layer of cells 300A, but also e.g. cell 310B comprised in layer of cells 300B, as well as e.g. cell 310C comprised in layer of cells 300C. In an embodiment, the criterion for classifying the neighborhood state of a first cell 310A in a first layer of cells 300A into a cluster of neighborhood states may be different from the criterion for classifying the neighborhood state of a second cell 310B in a second layer of cells 300B into a cluster of neighborhood states; i.e. the rule for updating the state of a first cell 310A in a first layer of cells 300A may be different from the rule for updating the state of a second cell 310B in a second layer of cells 310B. This way, different rules for updating cell states can be combined together for generating richer and more complex dynamic, coherent visual patterns. Moreover, mathematical function 200 shown in FIG. 1 may also have as input arguments the states of cells comprised in multiple layers of cells 300A-C.

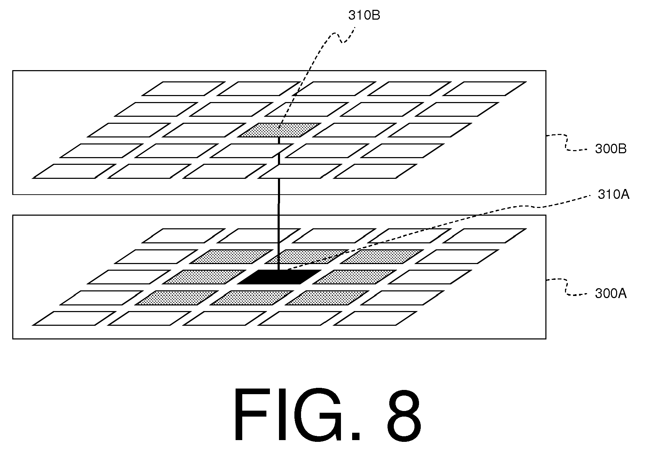

As seen in FIG. 6I-M, due to the reinforcement mechanism built into the method, as described earlier, the dynamic visual patterns generated may tend to become stable and predictable after a certain number of iterations of the method. This may happen because, after a certain number of iterations, the new neighborhood states generated define points in the mathematically-defined space that are very close to the reference points defined by the existing neighborhood state clusters, so the coordinates of the reference vectors (414A-C) cease to change in any significant way. To prevent this, the embodiment illustrated in FIG. 8 comprises two layers of cells. In a first layer of cells 300A the respective cell states are initialized randomly, and the method illustrated in FIG. 4 and FIG. 5 is used for updating the cell states. A Moore neighborhood is used, as depicted in FIG. 8 through the highlighted cells. However, the Moore neighborhood is extended to further comprise a cell 310B in a second layer of cells 300B. The cell states in the second layer of cells 300B are also initialized randomly. However, unlike the method for updating the cell states in the first layer of cells 300A, the cell states in the second layer of cells 300B are updated randomly. For this reason, the second layer of cells 300B is called a random layer. This way, in each iteration of the method the cell states of the first layer of cells 300A are updated on the basis of the neighborhood state clusters and associated classification criterion defined, while the cell states in the random layer 300B are updated with random or pseudo-random numbers. Because the cell neighborhood of a cell 310A in the first layer of cells 300A comprises one cell 310B that is always updated randomly, therefore being outside the influence of the reinforcement mechanism built into the method, the coordinates of at least some of the reference vectors (414A-C) are likely to be slowly but continuously updated towards other points of the mathematically-defined space, thereby preventing the classification criterion from becoming static. This ensures that the dynamic, coherent visual patterns being generated do not become predictable or monotonous. Naturally, a balance must be stricken between preventing predictability and preventing the generation of chaotic, non-coherent visual patterns. Since only one of the cells comprised in the cell neighborhood has its state updated randomly, while the other nine cells comprised in the cell neighborhood are updated according to the defined classification criterion, such balance is achieved in this embodiment. It should be noted that, through the use of a random layer, as illustrated in FIG. 8 and described above, the third object of the present invention is achieved.

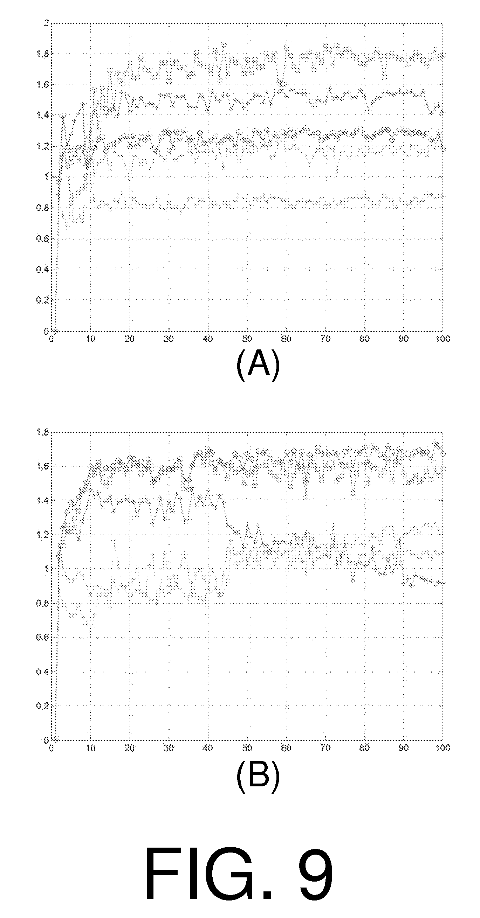

FIG. 9 illustrates how the use of a random layer (300B) influences the way the coordinates of the reference vectors (414A-C) are updated as the method is iterated upon. For generating the data illustrated in the plot shown in FIG. 9A no random layer is used. In the horizontal axis of the plot in FIG. 9A the number of performed iterations of the method is shown, from zero to one hundred iterations. The vertical axis of the plot in FIG. 9A shows five distances, each distance corresponding to one of five reference vectors (414A-C); each distance is the Euclidean distance between the point in the mathematically-defined space defined by the coordinates, at a given iteration, of the corresponding reference vector and its respective initial random coordinates. Therefore, the first distance is always zero, since it is the distance between a point and itself. It should be noted that, after a period of fast changes between the first and approximately the twentieth iteration, the distances appear to become largely constant, illustrating the effect of the reinforcement mechanism built into the method. FIG. 9B is analogous to FIG. 9A except that now a random layer 300B, as illustrated in FIG. 8, is used for generating the data illustrated in the plot. It should be noted that, in FIG. 9B, at least three of the five distances continue to drift slowly but constantly throughout the one hundred iterations of the method. This shows that the method illustrated in FIG. 8 operates as intended.

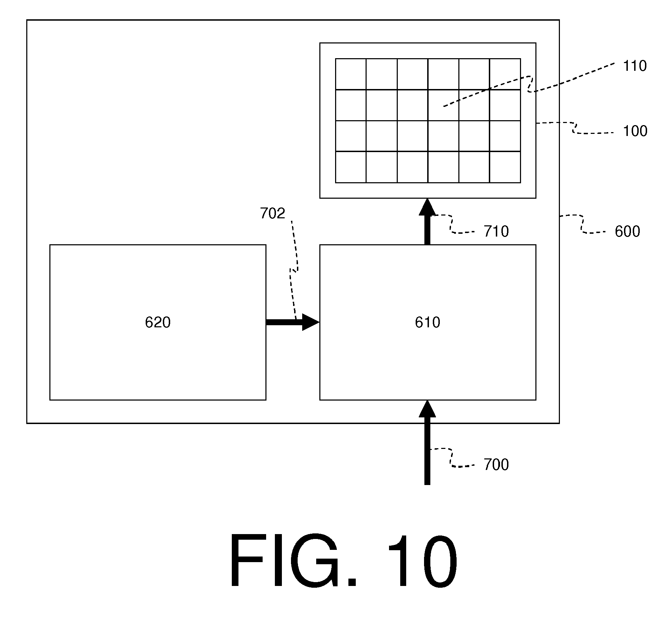

FIG. 10 illustrates an apparatus 600 for carrying out the method according to the present invention in order to generate image frames. The apparatus 600 comprises: (a) a display 100, said display comprising a plurality of display segments 110, each display segment comprising at least one physical pixel; (b) a processing system 610 for computing the method according to the present invention; and (c) a hardware random number generator 620 for generating random numbers based on the inherent uncertainty of a physical process like e.g. a quantum process. A preferred example of a hardware random number generator is Swiss company ID Quantique's Quantis random number generator. The hardware random number generator 620 provides random numbers 702 to the processing system 610. Processing system 610 also receives programming, configuration, and control information 700 from an external source, like e.g. a computer system. Depending on the random numbers 702 and the programming, configuration, and control information 700 processing system 610 generates, according to the method described in the present invention, data and control signals 710 corresponding to an image frame for displaying said image frame in display 100. Preferably, each image frame is generated on a frame segment basis according to the method illustrated in FIG. 1, so each frame segment is displayed in its corresponding display segment 110.

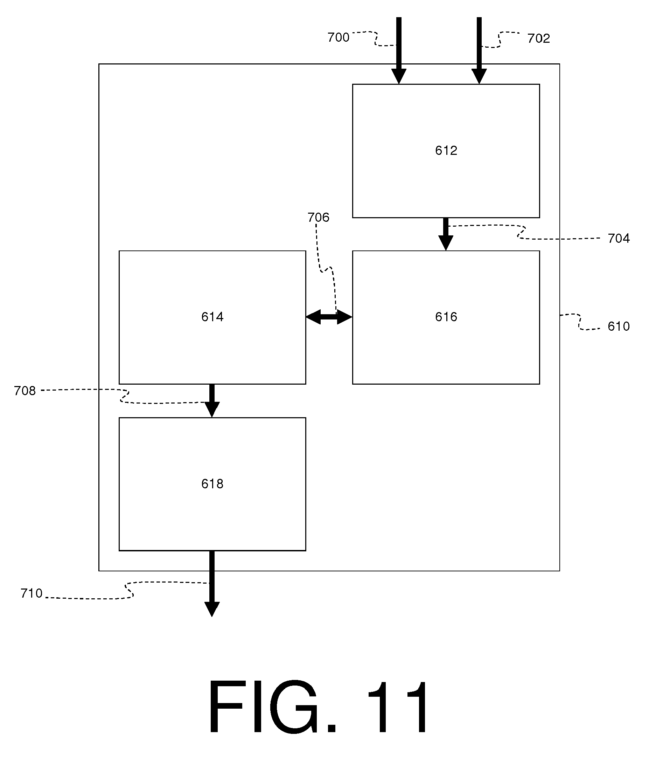

FIG. 11 shows more details of the processing system 610. Input interface 612 receives the random numbers 702 and the programming, configuration, and control information 700, and then e.g. decodes and/or demodulates the received data before storing properly-formatted data packages 704 in memory means 616. From memory means 616 the data packages can be accessed for further processing by a processor 614. Processor 614 preferably comprises a programmable digital microprocessor, as known in the art. However, processor 614 can also comprise an application-specific integrated circuit, an application-specific standard product, and/or multiple processing devices, like e.g. a combination of a programmable digital microprocessor and a field-programmable gate array (FPGA) device. Image frame data 708 corresponding to the generated image frame is then sent from the processor 614 to a display driver 618, which produces the appropriate data and control signals 710 for displaying the image frame in the display (100).

It should be noted that the above-mentioned embodiments illustrate rather than limit the present invention, and that those skilled in the art will be able to design many alternative embodiments without departing from the scope of the appended claims. It should also be noted that, although the description above is motivated by an application of the present invention to the field of generative visual art, those skilled in the art will be able to design advantageous embodiments for using the present invention in other fields or for other applications without departing from the scope of the appended claims. In the claims, any reference signs placed between parentheses shall not be construed as limiting the claim. The words "comprising" and "comprises" do not exclude the presence of elements or steps other than those listed in the claim. The words "a" or "an" preceding an element or step do not exclude the presence of a plurality of such elements or steps. The word "reference" preceding an element is used merely as an identifier of said element and should not be construed as qualifying or constraining said element in any way. When a first element or step is said to depend on a second element or step, said dependency does not exclude that the first element or step may also depend on one or more other elements or steps. Still in the appended claims, two different tuples of values of data elements may both contain a value of the same data element. The mere fact that certain measures are recited in mutually different dependent claims does not indicate that a combination of these measures cannot be used to advantage.

## Claims

1. A method for generating and displaying an image frame comprising a plurality of frame segments, the method comprising the steps of:
providing a set of data elements (300);
updating the value of a reference data element (310) of the set of data elements depending on a reference tuple (322) of values of data elements comprised in the set of data elements;
generating a particular frame segment of the plurality of frame segments depending on the value of the reference data element; and
displaying the particular frame segment;
**characterized in that** the method further comprises the steps of:
partitioning a plurality of tuples (320) of values of data elements comprised in the set of data elements into a plurality of clusters of tuples, the number of clusters in said plurality of clusters of tuples being smaller than the number of tuples in said plurality of tuples;
classifying the reference tuple into a cluster of the plurality of clusters of tuples depending on a similarity metric;
generating a new data value (520) depending on classification data (420) related to the classification of the reference tuple into a cluster of the plurality of clusters of tuples, the value of the reference data element being updated with said new data value.

2. A method as claimed in claim 1, **characterized in that**:
the reference tuple corresponds to a point (412) in a mathematically-defined space;
each cluster of the plurality of clusters of tuples also corresponds to a point (414A-C) in the mathematically-defined space;
the similarity metric comprises distances between the point in the mathematically-defined space corresponding to the reference tuple and the points in the mathematically-defined space corresponding to the clusters of the plurality of clusters of tuples; and
the distance between the point in the mathematically-defined space corresponding to the reference tuple and the point in the mathematically-defined space corresponding to the cluster of the plurality of clusters of tuples into which the reference tuple is classified is shorter than the distances between said point in the mathematically-defined space corresponding to the reference tuple and each of the points in the mathematically-defined space corresponding respectively to each other cluster of the plurality of clusters of tuples.

3. A method as claimed in claim 2, **characterized in that**:
each tuple of the plurality of tuples corresponds to a point in the mathematically-defined space; and
the point in the mathematically-defined space corresponding to a particular cluster of the plurality of clusters of tuples depends on the points in the mathematically-defined space corresponding to tuples of the plurality of tuples belonging to said particular cluster of the plurality of clusters of tuples.

4. A method as claimed in claim 3, **characterized in that** the step of partitioning the plurality of tuples into a plurality of clusters of tuples comprises the steps of:
selecting a particular tuple from the plurality of tuples;
determining a winning cluster of the plurality of clusters of tuples, whereby said winning cluster corresponds to a point in the mathematically-defined space whose distance to the point in the mathematically-defined space corresponding to said particular tuple is shorter than the distances between said point in the mathematically-defined space corresponding to said particular tuple and each of the points in the mathematically-defined space corresponding respectively to each other cluster of the plurality of clusters of tuples; and
changing the coordinates of the point in the mathematically-defined space corresponding to the winning cluster so the distance between said point in the mathematically-defined space corresponding to the winning cluster and the point in the mathematically-defined space corresponding to the particular tuple becomes shorter.

5. A method as claimed in any of the preceding claims, **characterized in that**:
a plurality of iterations of the method are performed;
the new data value is generated in a first iteration of the plurality of iterations; and
in a second iteration of the plurality of iterations the new data value is comprised in a tuple of the plurality of tuples.

6. A method as claimed in any of the preceding claims, **characterized in that** the set of data elements comprises a first 2-dimensional array of data elements (300A).

7. A method as claimed in claim 6, **characterized in that**:
the set of data elements further comprises a second 2-dimensional array of data elements (300B);
the reference tuple comprises a value of a data element comprised in the first 2-dimensional array of data elements; and
the reference tuple further comprises a value of a data element comprised in the second 2-dimensional array of data elements.

8. A method as claimed in any of the preceding claims, **characterized in that** a value of a data element (310B) of the set of data elements depends on a pseudo-random number generation algorithm.

9. A method as claimed in any of the preceding claims, **characterized in that** a value of a data element (310B) of the set of data elements depends on a stochastic process.

10. A method as claimed in any of the preceding claims, **characterized in that** the step of partitioning the plurality of tuples into the plurality of clusters of tuples is performed according to a partitional clustering algorithm.

11. A method as claimed in any of the preceding claims, **characterized in that** the step of partitioning the plurality of tuples into the plurality of clusters of tuples is performed according to an adaptive algorithm.

12. A method as claimed in claim 11, **characterized in that** the adaptive algorithm comprises an artificial neural network.

13. An apparatus (600) comprising:
a processing system (610) for generating an image frame comprising a plurality of frame segments; and
a display (100) comprising a plurality of display segments (110), each display segment of said plurality of display segments for displaying a frame segment of the plurality of frame segments;
**characterized in that** the apparatus is arranged to perform the steps of a method as claimed in any of the preceding claims.

14. An apparatus as claimed in claim 13, **characterized in that** the apparatus further comprises a hardware random number generator (620).

15. An apparatus as claimed in claim 14, **characterized in that** the hardware random number generator is based on a quantum phenomenon.
